# EUROPEAN PATENT APPLICATION

(11) **EP 1 614 792 A1**
(43) Date of publication of application: **11.01.2006**
(21) Application number: 05253041.7
(22) Date of filing: 18.05.2005
(51) Int. Cl.: D06F 25/00, D06F 58/04, D06F 58/20

(54) **A drum type washing machine**

(30) Priority: 06.07.2004 KR 2004052377
(71) Applicant: SAMSUNG ELECTRONICS CO., LTD., Suwon-si, Gyeonggi-do (KR)
(72) Inventor: Lee, Hong Yeol, Giheung-Eub Yongin-Si Gyeonggi-Do (KR); Lee, Jong Ouk, Suji-Eub Yongin-Si Gyeonggi-Do (KR); Jung, Yang Jo, Suwon-Si Gyeonggi-Do (KR)
(74) Representative: Davies, Robert Ean

(57) **Abstract**

Disclosed is a drum type washing machine defined within a housing (10) including a water tub (11) to hold water, a rotatable tub (12) rotatably installed in the water tub, and a drying apparatus (20) for drying laundry. The drying apparatus includes a blowing fan (21), a heater (23) to heat air that flows via the blowing fan, and upper (24A, 24B) and lower (25) cases coupled to each other such that the blowing fan (21) and the heater (23) are installed therebetween defining an inner fluid pathway (15). The upper case includes a first cover (24A) to allow the blowing fan (21) to be exposed to the outside of the housing and a second cover (24B) to allow the heater (23) to be exposed to the outside of the housing. As the blowing fan (21) and the heater (23) can be separately exposed to the outside of the housing, easy repair of the drying apparatus is possible.

## Description

The present invention relates to a drum type washing machine, and more particularly, but not exclusively, to a drum type washing machine which is provided with a drying apparatus for drying laundry.

Generally, a drum type washing machine is an apparatus in which laundry is raised to an upper portion of the washing machine along with water, and then released, to allow the laundry to be washed by a head thereof. The drum type washing machine generally includes a housing adapted to define an outer appearance of the washing machine, a water tub installed in the housing to contain water, and a rotating tub rotatably installed in the water tub and rotated by a rotational force transmitted from a drive motor to generate a rotational force.

Accordingly, as the rotating tub is rotated in the water tub, the laundry is raised to the upper portion of the washing machine along an inner peripheral surface of the rotating tub together with wash water, and is then dropped, to allow the laundry to be washed.

The drum type washing machine is equipped with a drying apparatus for drying completely washed laundry. The drying apparatus communicates with the rotating tub at both ends thereof, so that, after the intake of air from the rotating tub and heating the air, it supplies the heated air to the rotating tub to allow the laundry to be dried by use of the heated air.

Accordingly, the drying apparatus includes a blowing fan to generate an intake force and a blowing force while being rotated, allowing air to flow into the drying apparatus; a heater to heat the air passing through the drying apparatus; and upper and lower cases coupled to each other such that the blowing fan and the heater can be installed therebetween and such that an inner fluid pathway, through which air flows, can be defined therebetween.

However, in such a conventional drum type washing machine, if either the blowing fan or the heater must be repaired due to wear, it is necessary to completely disassemble the upper and lower cases from the drying apparatus. The blowing fan and the heater cannot be repaired separately . Consequently it is difficult to repair the drying apparatus.

Accordingly, it is an aim of embodiments of the present invention to provide a drum type washing machine defined within a housing, wherein the drum type washing machine is designed to enhance performance of a drying apparatus therein.

It is another aim of embodiments of the present invention to provide a drum type washing machine designed to allow easy repair of the drying apparatus.

Additional aspects and/or advantages of the invention will be set forth in part in the description which follows and, in part, will be obvious from the description, or may be learned by practice of the invention.

According to a first aspect of the present invention, there is provided a drum type washing machine including a water tub to hold water, a rotating tub rotatably installed in the water tub, and a drying apparatus to heat air while allowing air in the rotating tub to flow through the drying apparatus such that laundry contained in the rotating tub can be dried by heated air, and the drying apparatus includes a blowing fan to generate an intake force and a blowing force thus allowing air to flow into the drying apparatus, a heater to heat air that flows via the blowing fan in order to generate heated air, and upper and lower cases coupled to each other in a perpendicular direction such that the blowing fan and the heater are installed therebetween and such that an inner fluid pathway, through which air flows, is defined therebetween, the upper cases including a first cover to allow the blowing fan to be exposed to the outside of the housing, and a second cover to allow the heater to be exposed to the outside of the housing.

The upper and lower cases may be made of a high heat-insulating member.

The drying apparatus may be provided with heat dissipation plates to increase a heating area of air passing through the inner fluid pathway.

The heat dissipation plates may be provided on upper and lower sides of the heater, respectively, and may include an upper heat dissipation plate and a lower heat dissipation plate having shapes corresponding to inner sides of the upper and lower cases, respectively.

The inner sides of the upper and lower cases may be coated with a ceramic material to reduce damage caused by heat.

According to a second aspect of the present invention there is provided a drum type washing machine including a water tub to hold water, a rotating tub rotatably installed in the water tub, and a drying apparatus to heat air while allowing air in the rotating tub to flow through the drying apparatus such that laundry contained in the rotating tub can be dried by heated air, and the drying apparatus includes upper and lower cases coupled to each other in a perpendicular direction such that an inner fluid pathway, through which air flows, is defined therebetween, and the upper and lower cases are made of a high heat-insulating member.

The drying apparatus may include a blowing fan to generate an intake force and a blowing force between the upper and lower cases, allowing air to flow into the drying apparatus, and a heater to heat air that flows via the blowing fan, generating heated air, the upper case including a first cover to allow the blowing fan to be exposed to the outside of the housing, and a second cover to allow the heater to be exposed to the outside of the housing.

According to a third aspect of the present invention, there is provided a drying apparatus for a drum type washing machine defined within a housing, the drying apparatus comprising: a blowing fan to allow air to flow into the drying apparatus, a heater to heat air that flows via the blowing fan, and upper and lower cases coupled to each other such that the blowing fan and the heater are installed therebetween and such that an inner fluid pathway allowing air to flow therein is defined therebetween, and wherein the upper case includes a first cover to allow the blowing fan to be exposed to the outside of the housing and a second cover to allow the heater to be exposed to the outside of the housing.

For a better understanding of the invention, and to show how embodiments of the same may be carried into effect, reference will now be made, by way of example, to the accompanying diagrammatic drawings in which:
FIG. 1 is a cross-sectional view illustrating construction of a drum type washing machine according to an embodiment of the present invention; and
FIG. 2 is an exploded perspective view illustrating a drying apparatus of the drum type washing machine of FIG. 1 according to an embodiment of the present invention.

Reference will now be made in detail to embodiments of the present invention, examples of which are illustrated in the accompanying drawings, wherein like reference numerals refer to like elements throughout. The embodiments are described below to explain the present invention by referring to the figures.

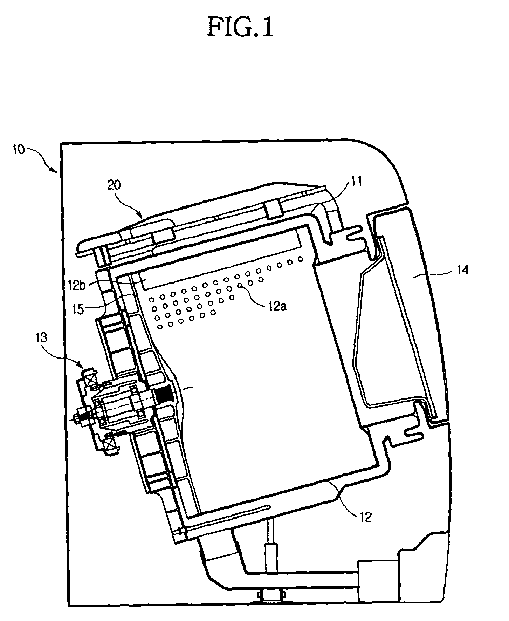

In FIG. 1, a drum type washing machine includes a housing 10 adapted to define an outer appearance of the washing machine, a water tub 11 installed in the housing 10 to hold water, and a drum-shaped rotatable tub 12 rotatably installed in the water tub 11 and formed at the surface thereof with communication holes 12a to allow water and air to pass therethrough, and a drive motor 13 to rotate the rotatable tub 12 to allow the laundry to be washed and dehydrated.

The water tub 11 and the rotatable tub 12 are formed at front sides thereof with openings, respectively, in order to allow the laundry to be put into the rotatable tub 12 or to be taken out therefrom. A door 14 is hinged to the front side of the housing 10 to open or close the communication holes 12a of the water tub 11 and the rotatable tub 12. A plurality of lifters 12b are arranged, and spaced at a predetermined distance from each other on an inner peripheral surface of the rotatable tub 12, such that, as the rotatable tub 12 is rotated, the lifters 12b raise the laundry to an upper portion of the rotatable tub 12 and release the laundry to be dropped and washed.

The drum type washing machine of embodiments of this invention is equipped, at an upper portion of the water tub 11, with a drying apparatus 20 to generate heated air and to dry the washed laundry. The drying apparatus 20 is communicated at both ends thereof with the front end of the water tub 11 and the rear end of the water tub 11, respectively, and has an inner fluid pathway 15 defined therein, so that air in the water tub 11 and the rotatable tub 12 can be heated while passing through the inner fluid pathway 15 of the drying apparatus 20 to form heated air having an elevated temperature which can then be supplied to the water tub 11 and the rotatable tub 12 again, thereby allowing the laundry in the rotatable tub 12 to be dried.

Accordingly, after the laundry is completely washed, as the drying apparatus 20 of the invention is operated while the rotatable tub 12 is rotated at a lower velocity, air in the water tub 11 and the rotatable tub 12 passes through the drying apparatus 20 and is then converted to heated air, thus drying the laundry.

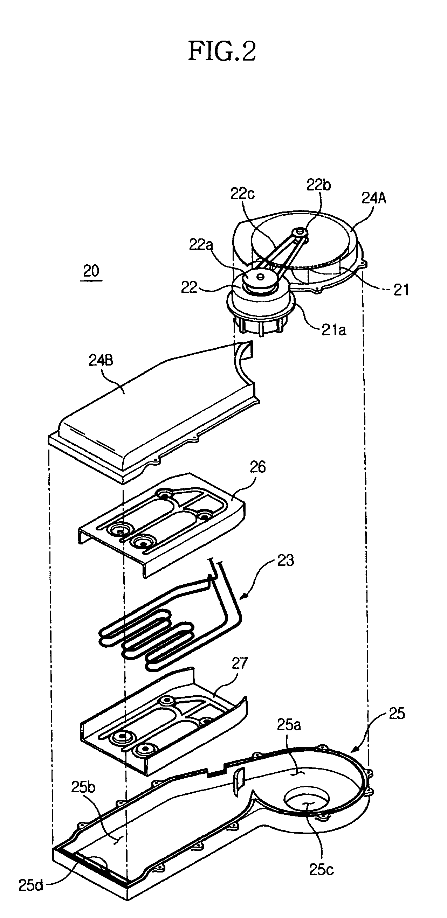

In FIG. 2, the drying apparatus 20, also shown in FIG. 1, includes a blowing fan 21 to generate an intake force and a blowing force, allowing air in the water tub 11 and the rotatable tub 12 to flow through the inner fluid pathway 15 of the drying apparatus 20, a fan motor 22 to rotate the blowing fan 21, a heater 23 to heat air that flows via the blowing fan 21, thus generating heated air. Upper cases 24A and 24B, and a lower case 25 are coupled to each other in the perpendicular direction such that the blowing fan 21 and the heater 23 are installed therebetween, and such that the inner fluid pathway 15 can be defined therebetween.

The lower case 25 is provided with a blowing fan receiving portion 25a to receive the blowing fan 21, and a heater receiving portion 25b to receive the heater 23. The fan receiving portion 25a has a circular shape to receive the blowing fan 21 constituted by a centrifugal fan, and is formed at the center thereof with an intake hole 25c to intake air from the water tub 11 and the rotatable tub 12. The heater receiving portion 25b is formed at one end thereof with a discharging aperture 25d such that air discharged from the heater 23 can pass therethrough and be supplied to the water tub 11 and the rotatable tub 12 after being heated by the heater 23.

The upper cases 24A and 24B are defined by a first cover 24A equipped on the fan receiving portion 25a to open or close the fan receiving portion 25a, and a second cover 24B equipped on the heater receiving portion 25b to open or close the heater receiving portion 25b such that if one of the blowing fan 21 and the heater 23 must be repaired, one of the blowing fan 21 and the heater 23 can be exposed to the outside of the housing to allow repairs without entirely disassembling the drying apparatus. At this time, the first and second covers 24A and 24B are coupled to the lower case 25 via fastening members, such as screws, and can be separated from the lower case 25 by releasing the screws, when required.

The first cover 24A is equipped at the center thereof with a rotational shaft of the blowing fan 21 passing through the first cover 24A to protrude upward from the first cover 24A, and, at one side of thereof, with a motor mounting portion 21 a having the fan motor 22 mounted therein and integrally extending from the first cover 24A. Furthermore, a driving pulley 22a and a driven pulley 22b are provided to a rotational shaft of the fan motor 22 and the rotational shaft of the blowing fan 21, respectively, such that the rotational force generated by the fan motor 22 can be transmitted to the blowing fan 21 through a belt 22c.

Additionally, the drying apparatus 20 of the drum type washing machine according to embodiments of the invention may include a high heat-insulating member, in order to reduce leakage of heat generated by the heater 23 to the outside of the housing so that most of the heat generated by the heater 23 can be used to heat air passing through the inner fluid pathway 15 of the drying apparatus 20. In this embodiment of the invention, the upper cases 24A and 24B, and the lower case 25 are made of a resin material, having a lower thermal conductivity than that of metallic materials, by injection molding.

Furthermore, the drying apparatus 20 may be provided with heat dissipation plates 26 and 27, which receive and dissipate heat transmitted from the heater 23, to increase the heating area of the air passing through the inner fluid pathway 15 of the drying apparatus 20, and to allow the air to be more efficiently heated.

The heat dissipation plates 26 and 27 are made of a metallic material having a high thermal conductivity in order to allow more easy dissipation of heat transmitted from the heater 23. The heat dissipation plates 26 and 27 are formed in the shape of a disc having a predetermined area, and are disposed to enclose the heater 23 at an upper side, a lower side, and lateral sides of the heater. Such heat dissipation plates 26 and 27 have an upper heat dissipation plate 26 shaped to correspond to the lower surface and inner lateral sides of the upper cases 24A and 24B, and a lower heat dissipation plate 27 shaped to correspond to the upper surface and inner lateral sides of the lower case 25.

Accordingly, when heat generated by the heater 23 is transmitted to the heat dissipation plates 26 and 27, the heat dissipation plates 26 and 27 made of the high thermal conductivity metallic material allow heat transfer in a short period of time increasing the overall temperature of the heat dissipation plates 26 and 27. As a result, since air passing through the inner fluid pathway 15 of the drying apparatus 20 contacts the heat dissipation plates 26 and 27 having a raised temperature as described above and is then heated, heat generated by the heater 23 can heat air more efficiently.

Furthermore, the inner sides of the upper and lower cases 24A, 24B, and 25 are coated with a ceramic material in order to reduce damage that can result from heated air passing through when the inner sides of the upper and lower cases are exposed to the heated air.

One of the advantages of embodiments of the present invention is that the drum type washing machine is equipped with the first and second covers on the lower case, where the blowing fan and the heater are installed to allow the blowing fan and the heater to be separately exposed to the outside of the housing facilitating repair of the drying apparatus.

Another advantage of embodiments of the present invention is that the drum type washing machine has the upper and lower cases made of the heat-insulating member having a high heat-insulating capability, reducing leakage of heat to the outside of the housing of the drying apparatus and allowing most of the heat generated by the heater to be used for heating air. Therefore, the laundry can be dried more efficiently.

Although a few embodiments of the present invention have been shown and described, it would be appreciated by those skilled in the art that changes may be made in this embodiment without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A drum type washing machine, comprising:
a water tub (11) to hold water;
a rotatable tub (12) rotatably installed in the water tub (11); and
a drying apparatus (20) to heat air while allowing air in the rotatable tub (12) to flow through the drying apparatus such that laundry contained in the rotatable tub can be dried by the heated air, the drying apparatus (20) comprising
a blowing fan (21) to generate an intake force and a blowing force, allowing air to flow into the drying apparatus,
a heater (23) to heat air that flows via the blowing fan (21), generating heated air, and
upper (24A, 24B) and lower (25) cases coupled to each other in a perpendicular direction such that the blowing fan (21) and the heater (23) are installed therebetween and such that an inner fluid pathway (15) allowing air to flow therein is defined therebetween, the upper case (24A, 24B) comprising
a first cover (24A) to allow the blowing fan (21) to be exposed when the first cover is removed, and
a second cover (24B) to allow the heater (23) to be exposed when the second cover is removed.

2. The drum type washing machine according to claim 1, wherein the upper (24A, 24B) and lower (25) cases are formed of a high heat-insulating material.

3. The drum type washing machine according to claim 1 or 2, further comprising heat dissipation plates (26, 27) to increase a heating area of air passing through the inner fluid pathway (15).

4. The drum type washing machine according to claim 3, wherein the heat dissipation plates (26, 27) are disposed on upper and lower sides of the heater (23), respectively, and comprise an upper heat dissipation plate (26) and a lower heat dissipation plate (27) shaped to correspond to inner sides of the upper (24B) and lower (25) cases, respectively.

5. The drum type washing machine according to any preceding claim, wherein the upper (24A, 24B) and lower (25) cases have inner sides coated with a ceramic material to reduce damage caused by heat.

6. The drying apparatus according to claim 4 or 5, wherein the heat dissipation plates (26, 27) are formed from a metal or metal alloy having a high thermal conductivity.

7. A drum type washing machine, comprising:
a water tub (11) to hold water;
a rotatable tub (12) rotatably installed in the water tub (11); and
a drying apparatus (20) to heat air while allowing air in the rotatable tub (12) to flow through the drying apparatus such that laundry contained in the rotatable tub can be dried by the heated air, the drying apparatus comprising
upper (24A, 24B) and lower (25) cases coupled to each other in a perpendicular direction such that an inner fluid pathway (15) allowing air to flow therein is defined therebetween, and the upper and lower cases being made of a high heat-insulating material.

8. The drum type washing machine according to claim 7, wherein the drying apparatus comprises
a blowing fan (21) to generate an intake force and a blowing force between the upper (24A, 24B) and lower (25) cases, allowing air to flow into the drying apparatus, and a heater (23) to heat air that flows via the blowing fan (21), generating heated air, and wherein the upper case (24A, 24B) comprises a first cover (24A) to allow the blowing fan (21) to be exposed when the first cover is removed and a second cover (24B) to allow the heater (23) to be exposed when the second cover is removed.

9. The drum type washing machine according to claim 8, wherein the drying apparatus (20) is provided with heat dissipation plates (26, 27) to increase a heating area of air passing through the inner fluid pathway (15).

10. The drum type washing machine according to claim 9, wherein the heat dissipation plates (26, 27) are disposed on upper and lower sides of the heater (23), respectively, and comprise an upper heat dissipation plate (26) and a lower heat dissipation plate (27) shaped to correspond to inner sides of the upper and lower cases, respectively.

11. The drum type washing machine according to any of claims 7-10, wherein the upper and lower cases have inner sides coated with a ceramic material to reduce damage caused by heat.

12. The drying apparatus according to any of claims 9-11, wherein the heat dissipation plates (26, 27) are formed from a metal or metal alloy having a high thermal conductivity.

13. A drying apparatus (20) for a drum type washing machine defined within a housing (10), the drying apparatus comprising:
a blowing fan (21) to allow air to flow into the drying apparatus (20),
a heater (23) to heat air that flows via the blowing fan (21), and
upper (24A, 24B) and lower (25) cases coupled to each other such that the blowing fan (21) and the heater (23) are installed therebetween and such that an inner fluid pathway (15) allowing air to flow therein is defined therebetween, and wherein the upper case includes a first cover (24A) to allow the blowing fan (21) to be exposed to the outside of the housing and a second cover (24B) to allow the heater (23) to be exposed to the outside of the housing.

14. The drying apparatus (20) according to claim 13, wherein the drying apparatus is provided with heat dissipation plates (26, 27) to increase a heating area of air passing through the inner fluid pathway (15).

15. The drying apparatus according to claim 14, wherein the heat dissipation plates (26, 27) are disposed on upper and lower sides of the heater (23), respectively, and comprise an upper heat dissipation plate (26) and a lower heat dissipation plate (27) shaped to correspond to inner sides of the upper and lower cases, respectively.

16. The drying apparatus according to any of claims 13-15, wherein the upper (24A, 24B) and lower (25) cases have inner sides coated with a ceramic material to reduce damage caused by heat.

17. The drying apparatus according to any of claims 13-16, wherein the upper (24A, 24B) and lower (25) cases are formed of a high heat-insulating material.

18. The drying apparatus according to any of claims 14-17, wherein the heat dissipation plates (26, 27) are formed from a metal or metal alloy having a high thermal conductivity.
